# EUROPEAN PATENT SPECIFICATION

(11) **EP 3 201 510 B1**
(45) Date of publication and mention of the grant of the patent: **05.12.2018**
(21) Application number: 14780473.6
(22) Date of filing: 01.10.2014
(51) Int. Cl.: F16M 11/04, F16M 11/10, F16M 13/02

(54) **EASY ACCESS MECHANISM FOR A WALL-MOUNTED IMAGE DISPLAY PANEL**
MECHANISMUS FÜR LEICHTEN ZUGANG FÜR EINE WANDMONTIERTE BILDANZEIGETAFEL
MÉCANISME D'ACCÈS FACILE POUR UN PANNEAU D'AFFICHAGE D'IMAGE À MONTAGE MURAL

(43) Date of publication of application: 09.08.2017
(73) Proprietor: Arçelik Anonim Sirketi, 34950 Istanbul (TR)
(72) Inventor: CEYLAN, Ozgur, 34950 Istanbul (TR); BEKCI, Erdal, 34950 Istanbul (TR); GULER, Cemal, 34950 Istanbul (TR); ASKAN, Mustafa, 34950 Istanbul (TR); MERT, Gokhan, 34950 Istanbul (TR); ALBANT, Bulent, 34950 Istanbul (TR)
(86) International application number: PCT/EP2014/071075
(87) International publication number: WO 2016/050297

(56) References cited:
- EP-A2- 1 401 200
- EP-A2- 2 216 582
- EP-A2- 2 610 538
- US-A1- 2011 303 810

## Description

The present invention relates to a wall mounting mechanism for a flat panel display device such as an LCD TV, LED TV; said wall mounting mechanism enabling easy access to component connection ports of the wall-mounted slim panel.

Wall mounting mechanisms are conventionally used for positioning an image display panel by a height on the wall suitable for TV viewing. Such mechanisms typically comprise a plurality of mechanical connection members, all together effectuating a strong and secure connection of the image display panel with the wall surface it is mounted on.

Mechanical connection members of the wall mounting mechanism may be generally fixed to the wall surface such that a carrier bracket communicates with a fixing plate connected to the image display panel.

A common problem with wall mounting mechanisms for flat image display panels can be suggested as the practical difficulty of manually reaching the rear surface of the image display device where component connection ports with a plurality of ports and sockets for connecting audio, video and other components is located. Such connections may for example include HDMI inputs, USB ports, component connections for audio and video, RCA connectors, RF input etc. When a user reaches for the connection port panel on the rear surface of the image display panel, he/she may experience great difficulty in locating and connecting/disconnecting cables/components primarily because the specific port cannot be directly seen and/or easily reached due to the short distance relative to the wall surface.

One of the prior art references among others in the technical field of the present invention may be referred to as CN202228880, the publication disclosing a mounting and fixing structure of an LCD display, which includes a base and an upright column connected onto the base, wherein a plurality of main beams are transversely connected onto the upright column; a plurality of vertical beams and a plurality of cross beams capable of adjusting position and used for hanging an LCD TV are uniformly arranged among the main beams and the components being detachably mounted.

Prior art document EP 2 610 538 A2 describes a supporting device according to the preamble of claim 1 having a plurality of support protrusions coupled to a rear surface of a display apparatus, a plurality of first support panels fixed to the wall, and a plurality of second support panels rotatably coupled to the first support panels, respectively, each second support panel having a receiving region by which a corresponding one of the support protrusions is received.

US 2011/303810 is related to a display hanging structure comprising a shaft that is fixed to the rear wall of the display by two hangers and which is received by fixing blocks that are attached to the wall.

EP 1 401 200 A2 discloses installation equipment for mounting a display main body which includes lower supporting brackets attached to the wall and rotatably supporting a lower back of the display main body and an upper supporting brackets attached to the wall and supporting a link assembly.

It is further worthy of note that a wall mounting mechanism for a flat image display panel should also involve a small number of components as it is desirable to keep costs as low as possible as well as to manufacture a product item having enhanced functionality without compromising structural simplicity. It is therefore of importance that a structural design should not contain mechanical elements having complex manufacturing processes or taking excessive time for assembling of various parts.

A further requisite that is supposed to be one of the aspects of a wall mounting mechanism is its suitability for easy operability by end users. The present invention therefore provides a wall-mounting mechanism for a flat image display panel which allows easy access to the connection port panel on the back surface of the TV, therefore addressing and overcoming the aforementioned inconveniences and problems, as defined in the characterized portion of Claim 1 and subsequent Claims.

Primary object of the present invention is to provide a wall-mounting mechanism for a flat image display panel which allows easy access to the connection port panel on the back surface of the image display panel. The present invention discloses a wall-mounting mechanism preferably with two fixing devices. The fixing devices are fixedly attached to a wall surface and receive the image display panel in a pivotally rotated manner. The image display panel is rotated along an axis parallel to the upper edge thereof. This provides that the lower edge can be tilted away from the wall surface.

Each of the fixing devices has a channel into which a bearing ball fixedly attached to the image display panel is slidably inserted and lowered to reach a lowermost support position at the lower end of the channel. A bearing ball part in connection with the image display panel is received at said final interlocked position and the spherical nature of the bearing balls provides rotation thereof around an axis joining the two. Therefore, the image display panel can be pivotally tilted around that axis relative to the wall.

The channel of the fixing device is a multilinear channel as a multilinear ball seat accommodating the bearing ball. It preferably has at least two preferably right-angled turning points making up successive linear segments.

This non-linear trajectory of the multilinear ball seat ensures that two bearing balls can be only simultaneously and symmetrically installed to reach their final interlocked positions. The two bearing balls therefore restrict each other such that they can only symmetrically rotate in the position interlocked with the fixing devices.

When the image display panel is tilted outwardly, the multilinear ball seats maintain the bearing balls in a restricted position, that is, they cannot disengage therefrom. The image display panel can then only be removed out from the fixing devices by the same installing trajectory of the bearing balls.

For the sake of a balanced operation, two wall support brackets being vertically aligned with a respective bearing ball are provided to lean on the wall surface at the normal viewing position of the image display panel.

Accompanying drawings are given solely for the purpose of exemplifying a wall-mounting mechanism for a flat image display panel whose advantages over prior art were outlined above and will be explained in brief hereinafter.

The drawings are not meant to delimit the scope of protection as identified in the claims nor should they be referred to alone in an effort to interpret the scope identified in said claims without recourse to the technical disclosure in the description of the present invention.

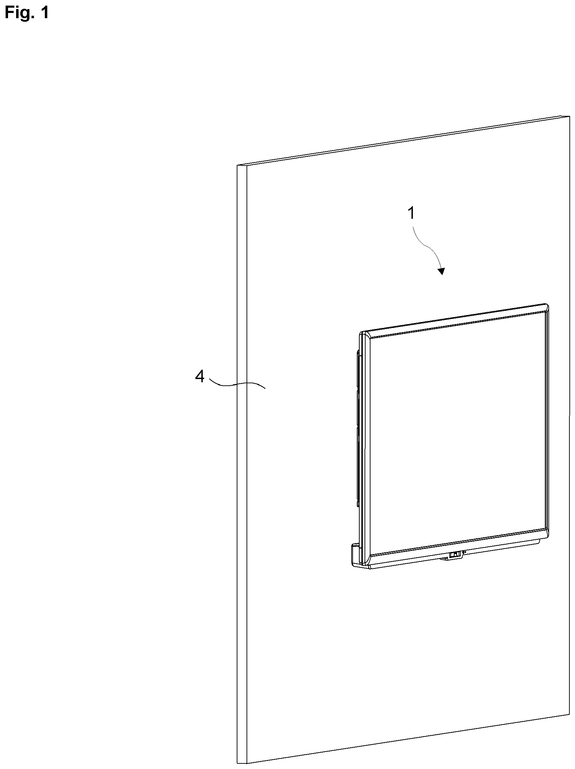

Fig. 1 demonstrates a general perspective front view of an image display panel mounted on a wall surface according to the present invention.

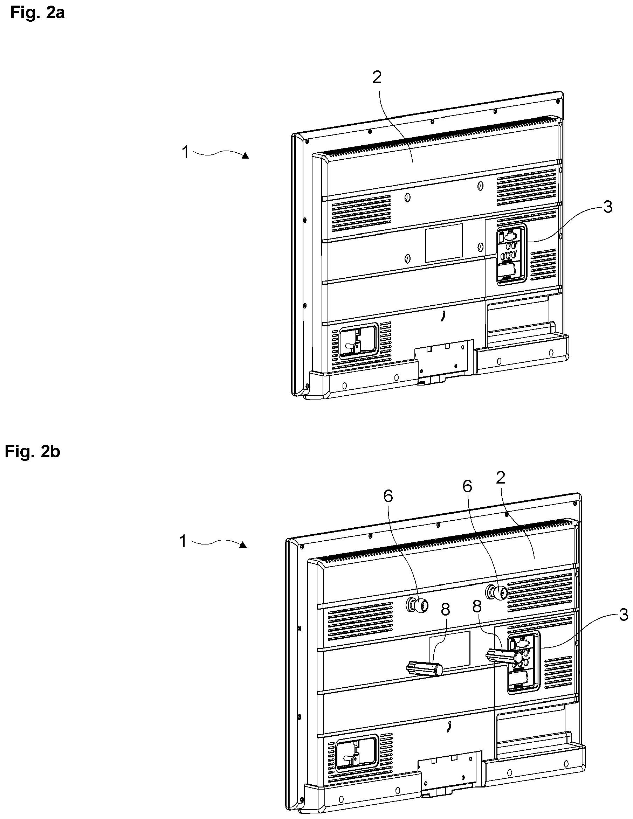

Fig. 2a and 2b demonstrate rear perspective views of the image display panel rear surface respectively with and without fixing device connection elements according to the present invention.

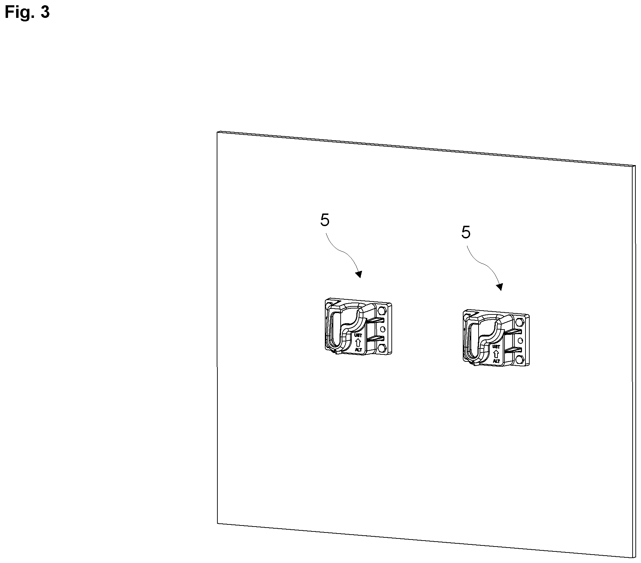

Fig. 3 demonstrates a front perspective view of fixing devices on the wall surface according to the present invention.

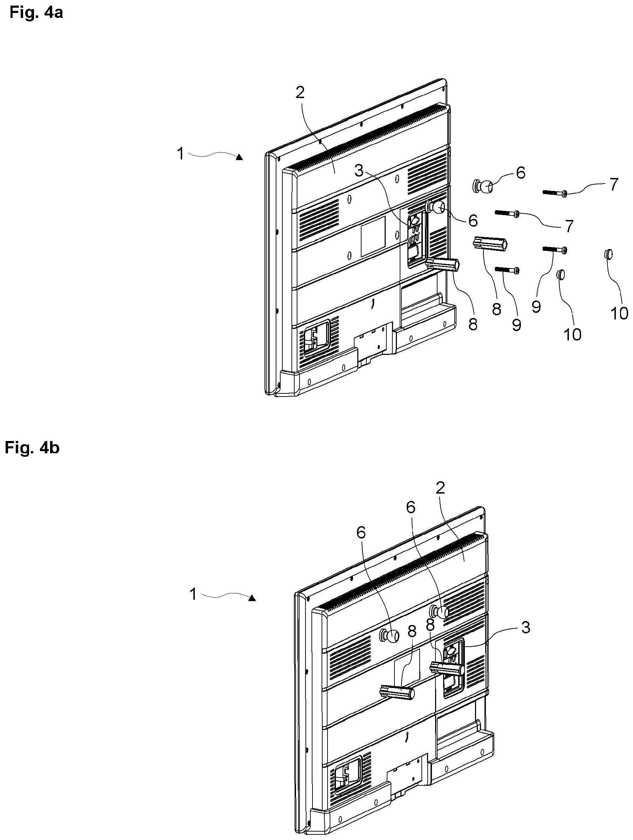

Fig. 4a and 4b demonstrate rear perspective views of the image display panel rear surface respectively as an exploded view of the connection elements and while the connection elements are mounted according to the present invention.

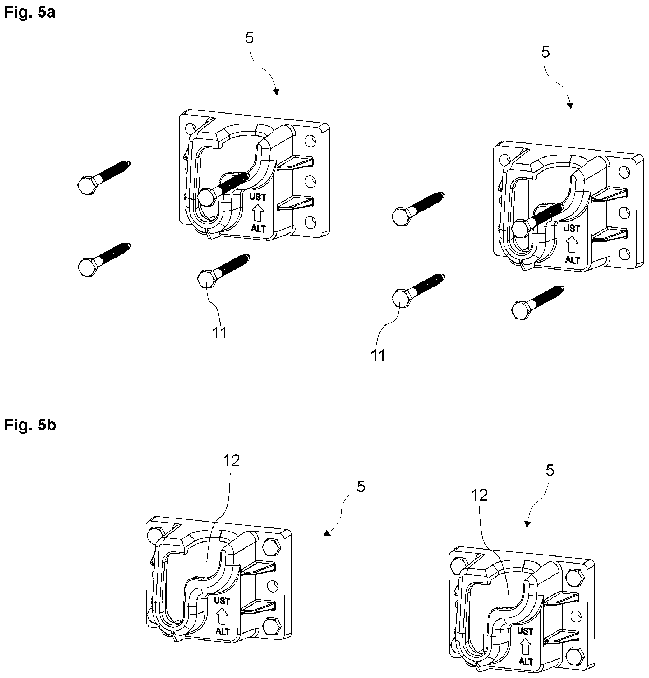

Fig. 5a and 5b demonstrate the fixing devices respectively as an exploded view of the connection elements and while the connection elements are mounted according to the present invention.
Fig. 6a, 6b and 6c demonstrate front perspective views of the positioning of the bearing balls progressively during mounting of the image display panel according to the present invention.
Fig. 7 demonstrates a front view of the final positioning of the bearing balls when mounted according to the present invention.
Fig. 8 demonstrates a lateral cross-sectional view of the connection elements in mounted state according to the present invention.

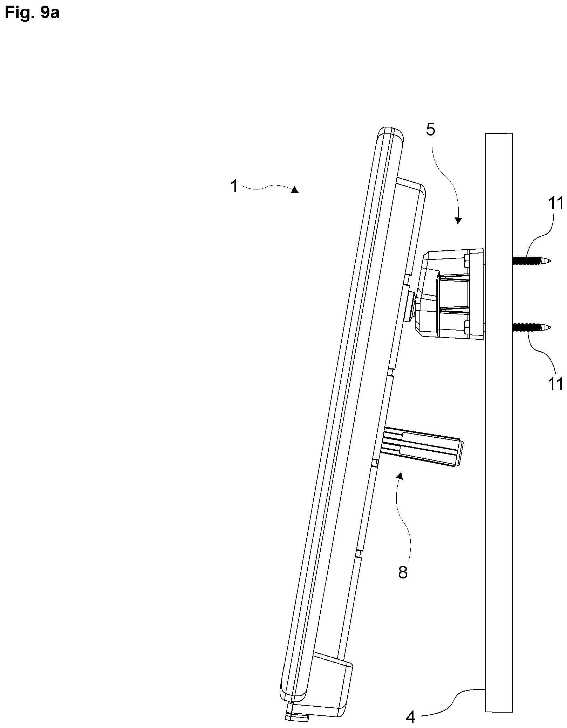

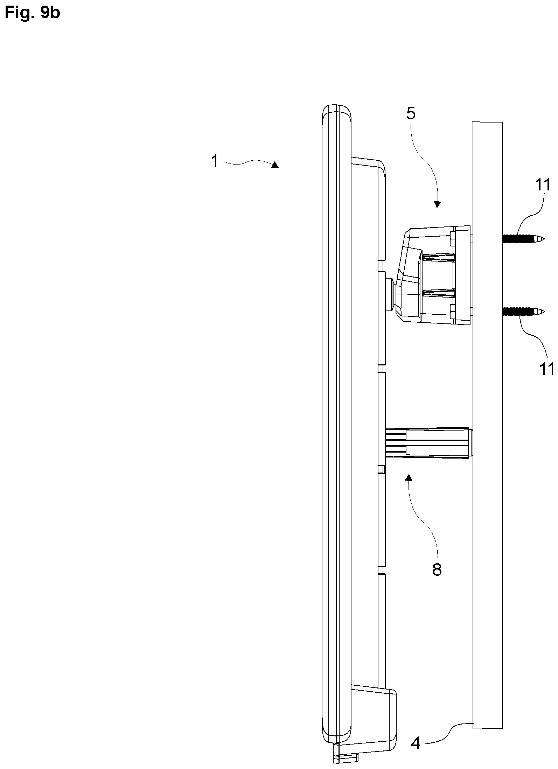

Fig. 9a and 9b demonstrate respectively the position of the image display panel relative to the wall surface for easier access to the rear connection port panel thereof and the usual viewing position as secured against the wall according to the present invention.

The followings numerals are assigned to different parts as referred to in the detailed description:
1. Image display panel
2. Rear cover
3. Connection port panel
4. Wall surface
5. Fixing device
6. Bearing ball
7. Bearing ball connection means
8. Wall support bracket
9. Support bracket connection means
10. Contact pad
11. Fixing device screw
12. Multilinear ball seat
13. Neck portion
14. Ball seat shoulder

The present invention proposes an image display panel (1) with a rear cover (2) having a connection port panel (3) with a plurality of ports and sockets for connecting audio, video and other components. A wall-mounting mechanism carries and supports the image display panel (1) in a fixed manner. The wall mounting mechanism typically establishes a mechanical connection between the image display panel (1) and a wall surface (3) portion.

According to the present invention, users can reach the connection ports panel (3) of the image display panel (1) on the rear surface thereof in a practical manner without experiencing any difficulty in locating and connecting/disconnecting cables and components. This is achieved thanks to the wall-mounting mechanism allowing tilting of the image display panel (1) around a rotation axis proximate the upper horizontal edge thereof. This provides that the user can pull the image display panel (1) away from the wall surface (3) holding the lower horizontal edge thereof and can easily view the connection port panel (3) in order for connecting or disconnecting any desired cable or component.

The wall-mounting mechanism of the invention features two fixing devices (5) fixedly mounted on the wall surface (4) by means of fixing device screws (11). Each fixing device (5) comprises a multilinear ball seat (12) receiving a respective bearing ball (6) fixedly connected to the rear surface of the image display panel (1). The bearing balls (6) are connected to the image display panel (1) by bearing ball connection means (7) such that the spherical portion of a bearing ball (6) constitutes the distal end in engagement with the multilinear ball seat (12) of the fixing device (5).

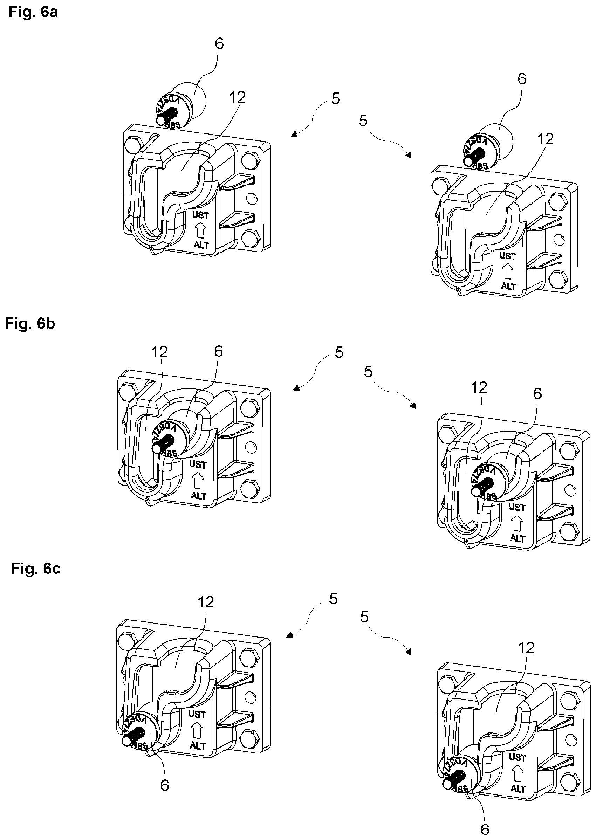

In accordance with the invention, two bearing balls (6) are simultaneously inserted into two multilinear ball seats (12) at upper mounting-axis openings to be symmetrically and simultaneously slid down through the multilinear ball seats (12) into the lowermost final positions as sequentially illustrated in Fig. 6a to 6c. The multilinear structure of the channel along the mounting axis ensures a reliable connection in terms of mechanical stability and prevents accidental removal of the image display panel (1) from the fixing devices (5). These two symmetrical multilinear ball seats (12) additionally ensure proper and error-free installation of the image display panel (1) on the fixing devices (5).

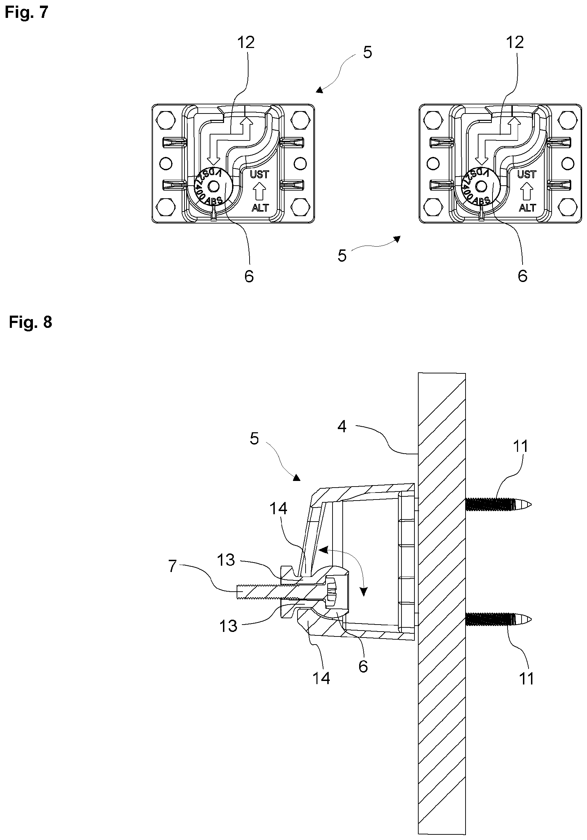

The present invention provides that a secure mechanical connection is established between the bearing balls (6) and the fixing devices' (5) multilinear ball seats (12) while at the same time allowing rotatability of the image display panel (1) around a rotation axis along a line extending between the two bearing balls (6) during the rotation thereof as illustrated by the arrows in Fig. 8. It is to be noted that the multilinear ball seats (12) still maintain the bearing balls (6) in a restricted position preventing disengagement when the image display panel (1) is tilted outwardly around said axis of rotation.

When the image display panel (1) is returned to its usual viewing angle relative to the wall surface (4) after the desired connection is made or unmade on the connection port panel (3), a pair of wall support brackets (8) secured to the image display panel (1) by means of support bracket connection means (9) lean on the wall surface (4) to balance the image display panel (1) relative to the wall. The wall support brackets (8) are provided with wall contact pads (10) to protect the wall surface (4) whereon the wall support brackets (8) press to balance the weight of the image display panel (1).

In a nutshell, the present invention provides a wall-mounting mechanism to connect an image display panel (1) to a wall surface (4), the wall-mounting mechanism establishing a mechanical connection between the image display panel (1) and the wall surface (4) to carry and support the image display panel (1) in a fixed manner and to enable access to a connection port panel (3) of the image display panel (1).

In one embodiment of the present invention, the wall-mounting mechanism comprises at least two fixing devices (5) securable to the wall surface (4) and to which the image display panel (1) is mountable in a pivotally rotated manner.

In a further embodiment of the present invention, each fixing device (5) comprises a channel into which a bearing ball (6) in connection with the image display panel (1) is received to reach a final interlocked position. The ball bearings (6) are received at the final interlocked positions by sliding and the weight of the image display panel (1) is securely carried by the fixing devices (5) only at these positions.

In a further embodiment of the present invention, each bearing ball (6) at the final interlocked position within the fixing device (5) channels is rotatable about its axis. Each bearing ball (6) is normally rotatable about its axis at the final interlocked position inside the fixing device (5) channel; however, when two bearing balls (6) are inserted in the channels in a coordinated manner, they can only unidirectionally rotate in a symmetrical manner. This provides a mechanically secure and error-free connection.

In a further embodiment of the present invention, the at least two fixing devices (5) are connectable with the image display panel (1) in the manner that the image display panel (1) is pivotally tilted around an axis of rotation extending along a line between the two fixing devices (5) relative to the wall surface (4). The two bearing balls (6) constitute the two ends of the axis of rotation. The locations and relative alignment of the bearing balls (6) on the rear cover (2) of the panel therefore determine the axis of rotation. The bearing balls (6) are preferably horizontally aligned and are proximate the upper horizontal edge of the image display panel (1) so that the user can rotate the same around the upper edge side thereof.

In a further embodiment of the present invention, the channel of the fixing device (5) is designed in the form of a multilinear ball seat (12) receiving a bearing ball (6). This arrangement ensures a coordinated, mutually symmetrical installation and prevents accidental disengagement of the image display panel (1).

In a further embodiment of the present invention, the multilinear ball seat (12) is comprised of at least two linear segments separated by directional turning points.

In a further embodiment of the present invention, the bearing ball (6) is fixedly connectable to a rear surface portion of the image display panel (1).

In a further embodiment of the present invention, the bearing ball (6) is connectable to the image display panel (1) by a bearing ball connection means (7) such that a spherical ball portion of a bearing ball (6) constitutes a distal end engaged with ball seat shoulders (14) of the multilinear ball seat (12) of the fixing device (5).

In a further embodiment of the present invention, two bearing balls (6) are simultaneously inserted into two multilinear ball seats (12) at mounting-axis openings to be symmetrically and simultaneously slid through the multilinear ball seats (12) into the final interlocked positions.

In a further embodiment of the present invention, the multilinear ball seats (12) maintain the bearing balls (6) in a restricted position preventing disengagement while the image display panel (1) is outwardly tilted around said axis of rotation because the ball seat shoulders (14) of the multilinear ball seats (12) of the fixing devices (5) prevent release of the bearing balls (6).

In a further embodiment of the present invention, the two bearing balls (6) restrict each other such that they are only symmetrically rotatable.

In a further embodiment of the present invention, a pair of wall support brackets (8) lean on the wall surface (4) to balance the image display panel (1) relative to the wall.

In a further embodiment of the present invention, each wall support bracket (8) is directionally aligned with a respective bearing ball (6), providing an improved balance and ergonomics.

In a further embodiment of the present invention, each wall support bracket (8) is provided with a wall contact pad (10) to protect the wall surface (4) whereon the wall support brackets (8) press.

In a further embodiment of the present invention, the bearing ball (6) engaged with the multilinear ball seat (12) of the fixing device (5) is retained in interlocked state by means of ball seat shoulders (14) surrounding a neck portion (13) of the bearing ball (6).

Therefore, the bearing balls (6) adapted to be received within the multilinear ball seats (12) in a disengageable but pivotally rotatable manner not only ensures easy access to the connection port panel (3) but also provides a rotatably interlocking groove/ball connection. Further, the multilinear structure of the fixing device (5) channels ensures a coordinated and non-accidental removal of the image display panel (1).

## Claims

1. A wall-mounting mechanism to connect an image display panel (1) to a wall surface (4), the wall-mounting mechanism establishing a mechanical connection between the image display panel (1) and the wall surface (4) to carry and support the image display panel (1) in a fixed manner and to enable access to a connection port panel (3) of the image display panel (1), wherein the wall-mounting mechanism comprises at least two fixing devices (5) securable to the wall surface (4) and to which the image display panel (1) is mountable in a pivotally rotated manner, **characterized in that**
- it comprises two bearing balls (6) which are fixedly connectable to a rear surface portion of the image display panel (1),
- each fixing device (5) comprises a channel into which a bearing ball (6) is received to reach a final interlocked position,
- each bearing ball (6) at the final interlocked position within the fixing device (5) channels is rotatable about its axis, such that a rotation of the image display panel (1) about a rotation axis extending through the two bearing balls (6) is allowed.

2. A wall-mounting mechanism as in Claim 1, **characterized in that** the at least two fixing devices (5) are connectable with the image display panel (1) in the manner that the image display panel (1) is pivotally tilted around an axis of rotation extending along a line between the two fixing devices (5) relative to the wall surface (4).

3. A wall-mounting mechanism as in Claim 1 and 2, **characterized in that** the channel of the fixing device (5) is designed in the form of a multilinear ball seat (12) receiving a bearing ball (6).

4. A wall-mounting mechanism as in Claim 4, **characterized in that** the multilinear ball seat (12) is comprised of at least two linear segments separated by directional turning points.

5. A wall-mounting mechanism as in any of claims 1 to 4, **characterized in that** the bearing ball (6) is connectable to the image display panel (1) by a bearing ball connection means (7) such that a spherical ball portion of a bearing ball (6) constitutes a distal end engaged with the multilinear ball seat (12) of the fixing device (5).

6. A wall-mounting mechanism as in Claim 3 or 4, **characterized in that** two bearing balls (6) are simultaneously inserted into two multilinear ball seats (12) at mounting-axis openings to be symmetrically and simultaneously slid through the multilinear ball seats (12) into the final interlocked positions.

7. A wall-mounting mechanism as in Claim 6, **characterized in that** the multilinear ball seats (12) maintain the bearing balls (6) in a restricted position preventing disengagement while the image display panel (1) is outwardly tilted around said axis of rotation.

8. A wall-mounting mechanism as in Claim 7, **characterized in that** the two bearing balls (6) restrict each other such that they are only symmetrically rotatable.

9. A wall-mounting mechanism as in Claim 7 or 8, **characterized in that** a pair of wall support brackets (8) lean on the wall surface (4) to balance the image display panel (1) relative to the wall.

10. A wall-mounting mechanism as in Claim 9, **characterized in that** each wall support bracket (8) is directionally aligned with a respective bearing ball (6).

11. A wall-mounting mechanism as in Claim 9 or 10, **characterized in that** each wall support bracket (8) is provided with a wall contact pad (10) to protect the wall surface (4) whereon the wall support brackets (8) press.

12. A wall-mounting mechanism as in Claim 5, **characterized in that** the bearing ball (6) engaged with the multilinear ball seat (12) of the fixing device (5) is retained in interlocked state by means of ball seat shoulders (14) surrounding a neck portion (13) of the bearing ball (6).

## Patentansprüche

1. Wandmontagemechanismus zum Verbinden einer Bildanzeigetafel (1) mit einer Wandfläche (4), wobei der Wandmontagemechanismus eine mechanische Verbindung zwischen dem Bildanzeigefeld (1) und der Wandfläche (4) herstellt, um das Bildanzeigefeld (1) auf eine feste Weise zu tragen und zu unterstützen und Zugang zu einem Verbindungsanschlußfeld (3) der Bildanzeigetafel (1) zu ermöglichen, wobei der Wandmontagemechanismus mindestens zwei Befestigungsvorrichtungen (5) umfasst, die an der Wandfläche (4) befestigbar sind und auf dem die Bildanzeigetafel (1) in einer verschwenkbar rotierte Weise montierbar ist, **dadurch gekennzeichnet, dass**
- zwei Lagerkugeln (6) umfasst, die fest mit einem hinteren Oberflächenbereich der Bildanzeigetafel (1) verbindbar sind,
- jede Befestigungsvorrichtung (5) einen Kanal umfasst, in den eine Lagerkugel (6) aufgenommen wird, um eine endgültige verriegelte Position zu erreichen,
- jede Lagerkugel (6) an der endgültigen verriegelten Position innerhalb der Befestigungsvorrichtung (5) um ihre Achse drehbar ist, derart, dass eine Drehung der Bildanzeigetafel (1) um eine Drehachse sich erstreckend durch die beiden Lagerkugeln (6) erlaubt ist.

2. Wandmontagemechanismus nach Anspruch 1, **dadurch gekennzeichnet, dass** mindestens zwei Befestigungsvorrichtungen (5) mit der Bildanzeigetafel (1) in der Weise verbindbar sind, dass die Bildanzeigetafel (1) um eine Drehachse schwenkbar ist, die sich entlang einer Linie zwischen den zwei Befestigungsvorrichtungen (5) relativ zu der Wandfläche (4) erstreckt.

3. Wandmontagemechanismus nach Anspruch 1 und 2, **dadurch gekennzeichnet, dass** der Kanal der Befestigungsvorrichtung (5) in Form eines multilinearen Kugelsitzes (12) ausgebildet ist, der eine Lagerkugel (6) aufnimmt.

4. Wandmontagemechanismus nach Anspruch 4, **dadurch gekennzeichnet, dass** der multilineare Kugelsitz (12) aus mindestens zwei linearen Segmenten besteht, die durch gerichtete Wendepunkte getrennt sind.

5. Wandmontagemechanismus nach einem der Ansprüche 1 bis 4 **dadurch gekennzeichnet, dass** die Lagerkugel (6) durch einer Lagerkugel-Verbindungsmittel (7) mit der Bildanzeigetafel (1) verbindbar ist, so dass ein kugelförmiger Kugelteil einer Lagerkugel (6) ein distales Ende bildet, das mit dem multilinearen Kugelsitz (12) der Befestigungsvorrichtung (5) in Eingriff steht.

6. Wandmontagemechanismus nach Anspruch 3 oder 4, **dadurch gekennzeichnet, dass** zwei Lagerkugeln (6) gleichzeitig in zwei mehrgliedrige Kugelsitze (12) an Befestigungsachsenöffnungen eingesetzt sind, um symmetrisch und gleichzeitig durch die mehrgliedrigen Kugelsitze (12) in die endgültigen verriegelten Positionen geschoben zu werden.

7. Wandmontagemechanismus nach 6, **dadurch gekennzeichnet, dass** die multilinearen Kugelsitze (12) die Lagerkugeln (6) in einer eingeschränkten Position halten, die ein Lösen verhindern, während die Bildanzeigetafel (1) um die Drehachse nach außen gekippt ist.

8. Wandmontagemechanismus nach Anspruch 7, **dadurch gekennzeichnet, dass** sich die beiden Lagerkugeln (6) derart gegenseitig begrenzen, dass sie nur symmetrisch drehbar sind.

9. Wandmontagemechanismus nach Anspruch 7 oder 8, **dadurch gekennzeichnet, dass** sich ein Paar von Wandabstützhalterungen (8) auf der Wandfläche (4) abstützen, um das Bildanzeigefeld (1) relativ zu der Wand auszugleichen.

10. Wandmontagemechanismus nach Anspruch 9, **dadurch gekennzeichnet, dass** jeder Wandabstützhalterung (8) mit einer entsprechenden Lagerkugel (6) ausgerichtet ist.

11. Wandmontagemechanismus nach Anspruch 9 oder 10, **dadurch gekennzeichnet, dass** jede Wandabstützhalterung (8) mit einer Wandkontaktkissen (10) versehen ist, um die Wandfläche (4) zu schützen, auf die die Wandabstützhalterung (8) drücken.

12. Wandmontagemechanismus nach Anspruch 5, **dadurch gekennzeichnet, dass** die Lagerkugel (6), die mit dem multilinearen Kugelsitz (12) der Befestigungsvorrichtung (5) in Eingriff steht, in einem verriegelten Zustand mittels Kugelsitzschultern (14) gehalten wird, die einen Halsabschnitt (13) der Lagerkugel umgeben (6).

## Revendications

1. Mécanisme de montage mural pour connecter un panneau d'affichage d'image (1) à une surface de paroi (4), le mécanisme de montage mural établissant une connexion mécanique entre le panneau d'affichage d'image (1) et la surface de paroi (4) pour porter et supporter le panneau d'affichage d'image (1) de manière fixe et pour donner accès à un panneau de port de connexion (3) du panneau d'affichage d'image (1), dans lequel le mécanisme de montage mural comprend au moins deux dispositifs de fixation (5) pouvant être fixés à la surface de paroi (4) et sur lesquels le panneau d'affichage d'image (1) peut être monté pivotant, **caractérisé en ce que**
- il comprend deux billes de roulement (6) pouvant être reliées de manière fixe à une partie de surface arrière du panneau d'affichage d'image (1),
- chaque dispositif de fixation (5) comprend un canal dans lequel une bille de roulement (6) est reçue pour atteindre une position finale verrouillée,
- chaque bille de roulement (6) en position de verrouillage final dans le dispositif de fixation (5) des canaux peut tourner autour de son axe, de sorte qu'une rotation du panneau d'affichage d'image (1) autour d'un axe de rotation s'étendant à travers les deux billes de roulement (6) est autorisée.

2. Mécanisme de montage mural selon la revendication 1, **caractérisé en ce que** les au moins deux dispositifs de fixation (5) peuvent être reliés au panneau d'affichage d'image (1) de manière que le panneau d'affichage d'image (1) soit pivoté autour d'un axe de une rotation s'étendant le long d'une ligne entre les deux dispositifs de fixation (5) par rapport à la surface de paroi (4).

3. Mécanisme de montage mural selon les revendications 1 et 2, **caractérisé en ce que** le canal du dispositif de fixation (5) est conçu sous la forme d'un siège à billes multilinéaire (12) recevant une bille de roulement (6).

4. Mécanisme de montage mural selon la revendication 4, **caractérisé en ce que** le siège à bille multilinéaire (12) est composé d'au moins deux segments linéaires séparés par des points de rotation directionnels.

5. Mécanisme de montage mural selon l'une quelconque des revendications 1 à 4, **caractérisé en ce que** la bille de roulement (6) peut être reliée au panneau d'affichage d'image (1) par un moyen de connexion à bille de roulement (7) de sorte qu'une partie sphérique d'une bille de roulement (6) constitue une extrémité distale engagée dans le siège à bille multilinéaire (12) du dispositif de fixation (5).

6. Mécanisme de montage mural selon la revendication 3 ou 4, **caractérisé en ce que** deux billes de roulement (6) sont simultanément insérées dans deux sièges de bille multilinéaires (12) au niveau des ouvertures des axes de montage afin de glisser symétriquement et simultanément à travers les sièges de bille multilinéaires (12) dans les positions de verrouillage finales.

7. Mécanisme de montage mural selon les revendications 6, **caractérisé en ce que** les sièges de bille multilinéaires (12) maintiennent les billes de roulement (6) dans une position restreinte empêchant le dégagement tandis que le panneau d'affichage d'image (1) est incliné vers l'extérieur autour dudit axe de rotation.

8. Mécanisme de montage mural selon la revendication 7, **caractérisé en ce que** les deux billes de roulement (6) se limitent mutuellement à tourner.

9. Mécanisme de montage mural selon la revendication 7 ou 8, **caractérisé en ce qu'**une paire de supports de support de paroi (8) s'appuie sur la surface de paroi (4) pour équilibrer le panneau d'affichage d'image (1) par rapport au mur.

10. Mécanisme de montage mural selon la revendication 9, **caractérisé en ce que** chaque support de support de paroi (8) est aligné avec une bille de roulement respective (6).

11. Mécanisme de montage mural selon la revendication 9 ou 10, **caractérisé en ce que** chaque support de support de paroi (8) est pourvu d'un plot de contact mural (10) pour protéger la surface de paroi (4) sur laquelle les supports de support de paroi (8) se pressent.

12. Mécanisme de montage mural selon la revendication 5, **caractérisé en ce que** la bille de roulement (6) en prise avec le siège de bille multilinéaire (12) du dispositif de fixation (5) est maintenue dans un état solidaire au moyen des épaulements (14) de siège de bille entourant un col (13) de la bille de roulement (6).
